# EUROPÄISCHE PATENTSCHRIFT

(11) **EP 1 597 786 B1**
(45) Veröffentlichungstag und Bekanntmachung des Hinweises auf die Patenterteilung: **29.10.2008**
(21) Anmeldenummer: 04704168.6
(22) Anmeldetag: 22.01.2004
(51) Int. Cl.: H01M 8/02, H01M 8/24

(54) **HERSTELLUNG EINES HOCHTEMPERATUR-BRENNSTOFFZELLENSTAPELS**
PRODUCTION OF A HIGH-TEMPERATURE FUEL CELL STACK
PRODUCTION D'UN EMPILEMENT DE PILES A COMBUSTIBLE HAUTE TEMPERATURE

(30) Priorität: 27.02.2003 DE 10308382
(43) Veröffentlichungstag der Anmeldung: 23.11.2005
(73) Patentinhaber: Forschungszentrum Jülich GmbH, 52425 Jülich (DE)
(72) Erfinder: PETERS, Roland, 52441 Linnich (DE); BLUM, Ludger, 52428 Jülich (DE)
(86) Internationale Anmeldenummer: PCT/DE2004/000085
(87) Internationale Veröffentlichungsnummer: WO 2004/077587

(56) Entgegenhaltungen:
- EP-A- 0 620 609
- DE-A1- 19 506 690
- US-A- 5 009 968
- US-A- 5 527 634
- DATABASE WPI Section EI, Week 199815 Derwent Publications Ltd., London, GB; Class X16, AN 1998-165450 XP002317702 & JP 10 032016 A (ISHIKAWAJIMA HARIMA HEAVY IND) 3. Februar 1998 (1998-02-03)

## Beschreibung

Die Erfindung betrifft ein Verfahren zur Herstellung eines Hochtemperatur-Brennstoffzellenstapels, insbesondere die Verspannung eines Stapels aus planaren Hochtemperatur-Brennstoffzellen (SOFC).

### Stand der Technik

Eine grundlegende Bedingung für den zuverlässigen Betrieb eines Hochtemperatur-Brennstoffzellenstapels ist die Dichtigkeit der einzelnen Bauteile unter verschiedensten Randbedingungen. Dafür werden die einzelnen Ebenen eines Stapels sowie die dazwischen liegenden Dichtungen, wie beispielsweise Metallfolien, Glimmer, Glaslot oder ähnliches, regelmäßig mechanisch verspannt. An das Verspannen eines Hochtemperatur-Brennstoffzellenstapels im Rahmen der Herstellung und des Betriebs werden aber aufgrund der hohen Betriebstemperaturen von regelmäßig über 700 °C hohe Anforderungen gestellt.

Aus dem Stand der Technik ist bekannt, die Verspannung eines Hochtemperatur-Brennstoffzellenstapels durch Auflegen einer Last auf den Stapel zu realisieren. Dies führt aber nachteilig zu einer erhöhten Bauweise, zu einem erhöhten Gewicht und oft auch zu erhöhten Kosten.

Es ist ferner aus dem Stand der Technik bekannt, für die Verspannung eines Hochtemperatur-Brennstoffzellenstapels Zuganker einzusetzen. Diese speziellen, für hohe Temperaturen bis über 1000 °C geeignete Zuganker, weisen häufig einen derartigen thermischen Ausdehnungskoeffizienten auf, dass das Aufheizen des Stapels regelmäßig zu einer definierten und immer stärkeren Verspannung durch den Zuganker führt.

Die für diesen Einsatz geeigneten Zuganker bestehen nachteilig aus sehr teuren, hochwarmfesten Stählen mit einer sehr geringen Kriechneigung und einem, im Vergleich zu den aus dem Stand der Technik bekannten Stählen für Standardzuganker, niedrigen thermischen Ausdehnungskoeffizienten. Da Kriechen auch bei diesen speziellen Stählen nicht ganz ausgeschlossen werden kann, bleibt dennoch die Gefahr beim Einsatz der speziellen Zuganker, dass ein ausreichend hoher Anpressdruck auf den Stapel über eine längere Zeit nicht immer aufrecht zu erhalten ist.

US 5,527,634 A offenbart eine Spannvorrichtung für einen Hochtemperatur-Brennstoffzellenstapel, in dem thermische und elektrische Isolationsplatten oberhalb und unterhalb der Gasverteilungsplatten angeordnet sind. Oberhalb und unterhalb der Isolationsplatten befinden sich Druckplatten, die durch axiale Zuganker verspannt sind. Zusätzlich kann eine thermische Isolationsumhüllung den Zellstapel und die Gasverteilerplatten umgeben. Der Zellstapel kann dabei mittels eines entsprechend temperierten Gasstroms aufgeheizt oder gekühlt werden.

In US 5,009,968 A wird eine halb steife Isolierung zwischen einem Zellstapel einer Hochtemperatur-Brennstoffzelle und einer Spannvorrichtung offenbart.

Die JP 10 032016 A beschreibt eine Spann- und Heizvorrichtung für eine Hochtemperatur-Brennstoffzelle, worin eine thermische Isolationsschicht zwischen der Stromabnahmeplatte und der Druckplatte vorgesehen ist.

Ferner wird in EP 0 620 609 A eine Rahmenkonstruktion offenbart, die Teile der Spannvorrichtung integriert. Die Krafteinleitung auf die Druckelemente erfolgt dabei über Zuganker. Isolierplatten dienen zur thermischen und elektrischen Isolierung zwischen dem Zellstapel und den Spannelementen.

Aus DE 195 06 690 A1 ist eine Spannvorrichtung zum Verspannen von Hochtemperatur-Bauelementen bekannt, bei der zwischen Spannelement und den Hochtemperatur-Bauelementen thermische Isolierelemente angeordnet sind. Bei den Hochtemperatur-Bauelementen handelt es sich insbesondere um stapelförmig angeordnete, bei Temperaturen bis zu 1000 °C arbeitende Hochtemperatur-Brennstoffzellen oder Bauelemente von Hochtemperatur-Brennstoffzellen.

### Aufgabe und Lösung

Die Aufgabe der Erfindung ist es, ein Verfahren zur Herstellung eines Hochtemperatur-Brennstoffzellenstapels zu schaffen, bei dem über eine ausreichend lange Zeit eine Verspannung des Stapels unter Betriebsbedingungen erreicht und damit eine sichere Gewährleistung von Dichtigkeit erzielt werden kann. Ferner ist es die Aufgabe der Erfindung eine Vorrichtung zur Durchführung des vorgenannten Verfahrens zur Verfügung zu stellen.

Die Aufgabe der Erfindung wird gelöst durch ein Verfahren mit der Gesamtheit der Merkmale gemäß Hauptanspruch. Vorteilhafte Ausgestaltungen des Verfahrens ergeben sich aus den darauf rückbezogenen Unteransprüchen.

Die Aufgabe der Erfindung wird ebenfalls gelöst durch eine Vorrichtung mit der Gesamtheit der Merkmale gemäß Nebenanspruch. Vorteilhafte Ausgestaltungen dieser Vorrichtung finden sich in den auf den Nebenanspruch rückbezogenen Ansprüchen.

### Gegenstand der Erfindung

Im Rahmen der Erfindung wurde gefunden, dass auf teure und nicht sicher zuverlässige herkömmliche spezielle Zuganker aus teuren, hochwarmfesten Stählen bei der Verspannung eines Hochtemperatur-Brennstoffzellenstapels verzichtet werden kann, sofern das Aufheizen des Stapels auf Betriebstemperatur innerhalb einer Isolation vorgenommen wird. In einem solchen Fall können vorteilhaft herkömmliche Standardzuganker für die Verspannung des Stapels außerhalb der Isolation verwendet werden.

Eine dazu geeignete Spann- und Isolationsvorrichtung, im folgenden Spannvorrichtung genannt, umfasst dazu vorteilhaft eine Anschlussplatte, eine den Hochtemperatur-Brennstoffzellenstapel allseitig umschließende, geeignete Isolierung, sowie Mittel zum Verspannen des Stapels, die außerhalb der Isolierung angeordnet sind. Solche geeigneten Mittel zum Verspannen können beispielsweise zwei außerhalb der Isolierung angeordnete Spannplatten mit aufgebrachten Spannrahmen sein, die jeweils Aufnahmen für wenigstens zwei Zuganker aufweisen.

Eine geeignete Isolierung für einen Hochtemperatur-Brennstoffzellenstapel weist regelmäßig Abmessungen auf, die dem aufzunehmenden Hochtemperatur-Brennstoffzellenstapel entsprechen. Die Isolierung ist vorteilhaft allseitig, d. h. auf allen sechs Seiten des aufzunehmenden Hochtemperatur-Brennstoffzellenstapels vorgesehen. Optional sind für Betriebsmittelzu- und/oder - abführungen, Stromabführungen o. ä. für den Stapel entsprechende Aussparung vorgesehen.

Die Isolation kann ein- oder mehrlagig ausgestaltet sein, wobei bei mehrlagigen Isolationen gleiche oder auch verschiedene Materialien eingesetzt werden können. Das Material selbst ist dazu geeignet, in der vorgesehenen Weise einen Wärmedurchgang von einem innen angeordneten Hochtemperatur-Brennstoffzellenstapel nach außen regelmäßig zu verhindern. Darunter ist zu verstehen, dass während im Inneren der Isolation der Stapel unter Betriebsbedingungen Temperaturen bis ca. 900 °C aufweist, durch diese Isolation außen beispielsweise nur noch Temperaturen unterhalb von 100 °C vorliegen. Dazu sind insbesondere herkömmliche Hochtemperaturisolierplatten auf Basis von Al₂O₃ oder auch mikroporöse Dämmstoffe geeignet.

Das Isolationsmaterial hält ferner regelmäßig Flächenbelastungen von weniger als 1 N/mm² ohne unzulässige Verformung aus. Dies entspricht dem typischen Anpressdruck, den die Zuganker regelmäßig beim Verspannen auf den Stapel ausüben. Da zwischen den Mitteln zum Verspannen und dem Hochtemperatur-Brennstoffzellenstapel die Isolierung angeordnet ist, muss verhindert werden, dass die Isolation den durch die Mittel aufgebrachten gewünschten Anpressdruck für den Stapel selbst durch Verformung aufnimmt bzw. so deutlich reduziert, dass der effektive Anpressdruck für den Stapel deutlich geringer als der gewünschte Anpressdruck ist. Vorteilhaft sollte das Isolationsmaterial den Anpressdruck nahezu direkt auf den Stapel übertragen.

Der Vorteil der Erfindung liegt darin, dass die Komponenten der Spannvorrichtung, insbesondere die Mittel zum Verspannen (z. B. Spannrahmen, Zuganker, Anpressfedern, Muttern) durch das Vorsehen einer Isolation einer Einsatztemperatur von regelmäßig unter 100 °C unterliegen, wodurch kostengünstige Standardwerkstoffe und Standardkomponenten einsetzbar sind. Gleichzeitig wird eine zuverlässige und langzeitstabile Verspannung des Stapels erzielt. Das Aufheizen des Stapels auf Betriebstemperatur kann beispielsweise durch innerhalb der Isolierung eingebrachte Heizwendeln oder durch in den Stapel integrierte Heizelemente oder auch durch zuvor aufgeheizte Gase erfolgen.

Das gesamte Verfahren zum Herstellen, insbesondere zum Verspannen eines Hochtemperatur-Brennstoffzellenstapels mit Hilfe einer zur Durchführung des Verfahrens geeigneten Spannvorrichtung lässt sich beispielsweise wie folgt beschreiben:
- Der Hochtemperatur-Brennstoffzellenstapel wird in einen Ofen eingebracht und durch Auflegen einer Last einem definierten Druck ausgesetzt.
- Während des Aufheizens wird Dichtungsmaterial, beispielsweise Glaslot, aufgeschmolzen und führt zur Abdichtung der Einzelzellen innerhalb des Stapels und des Stapels selbst.
- Der abgekühlte, aber noch unter Druck stehende Stapel, wird behelfsmäßig mit Zugankern, vorteilhaft Standardzuganker inklusive entsprechender Andruckfedern, verspannt und an seinen Einsatzort verbracht.
- Der behelfsmäßig verspannte Stapel wird zunächst auf eine Anschlussplatte oder direkt auf die letzte Zelle eines Brennstoffzellenstapels aufgesetzt und anschließend mit einer Isolation umgeben.
- Die Mittel zum Verspannen des Stapels werden außerhalb der Isolation angeordnet, beispielsweise werden an zwei gegenüberliegenden Seiten Spannplatten mit oder ohne Spannrahmen angebracht, die Aufnahmen für Standardzuganker aufweisen.
- Der Stapel wird mit Hilfe der Mittel zum Verspannen derart verspannt, dass anschließend die behelfsmäßige Verspannung gelöst werden kann. Dazu sind beispielsweise in den oberen zwei Isolierungselementen sowie in der oberen Spannplatte, einschließlich Spannrahmen, Bohrungen vorgesehen. Die behelfsmäßigen Zuganker befinden sich nach dem Anbringen der Isolierung und der Spannplatte innerhalb dieser Bohrungen. Nach dem Verspannen mit der entgültigen Vorrichtung werden diese gelöst und nach oben herausgezogen. Anschließend werden die Bohrungen mit dem entsprechenden Isoliermaterial aufgefüllt.
- Der nunmehr außerhalb der Isolation verspannte Stapel wird auf Betriebstemperatur aufgeheizt.

Der Einbau des Stapels in die erfindungsgemäße Spannvorrichtung und das Lösen der behelfsmäßigen Verspannung führen zwar zunächst zu einem erhöhten Arbeitsaufwand, aber die sich durch den Einsatz von Standardkomponenten ergebende Kostenersparnis und die Sicherheit einer langzeitstabilen Verspannung des Stapels überwiegen diesen Nachteil deutlich.

Die im Stand der Technik eingesetzten speziellen, hochwarmfesten Zuganker müssen aus hochwarmfestem Stahl gefertigt werden, deren Temperaturbeständigkeit höher als 1000 °C liegt. Problematisch ist das Ausdehnungsverhalten dieser Stähle. Für die SOFC-Brennstoffzelle werden als Plattenmaterial, ferittische Stähle verwendet, deren Ausdehnungskoeffizient bei ca. 1,3*10⁻⁵ l/K liegt. Handelsübliche hochwarmfeste Stähle sind austenitische Stähle mit einem Ausdehnungskoeffizienten, der bei ca. 1,8*10⁻⁵ l/K liegt. Diese Art von Stählen ist zum Verspannen ungeeignet, da er sich beim Aufheizen der Brennstoffzelle stärker ausdehnen würde als der Stapel selbst und somit der Verspannung entgegenwirkt. Für diese Anwendung müssen daher speziell entwickelte Stähle verwendet werden. Aus den vorgenannten Gründen ist der Einsatz von Standardkomponenten ein wesentlicher Vorteil dieser Spannvorrichtung.

### Spezieller Beschreibungsteil

Nachfolgend wird der Gegenstand der Erfindung anhand von Figuren und einem Ausführungsbeispiel näher erläutert, ohne dass der Gegenstand der Erfindung dadurch beschränkt wird. Es zeigen:
- Figur 1a, b:: Perspektivische Zeichnung einer zur Durchführung des Verfahrens geeigneten Spannvorrichtung.
- Figur 2a,b,c:: Ansichtszeichnungen einer zur Durchführung des Verfahrens geeigneten Spannvorrichtung für die drei Raumrichtungen.

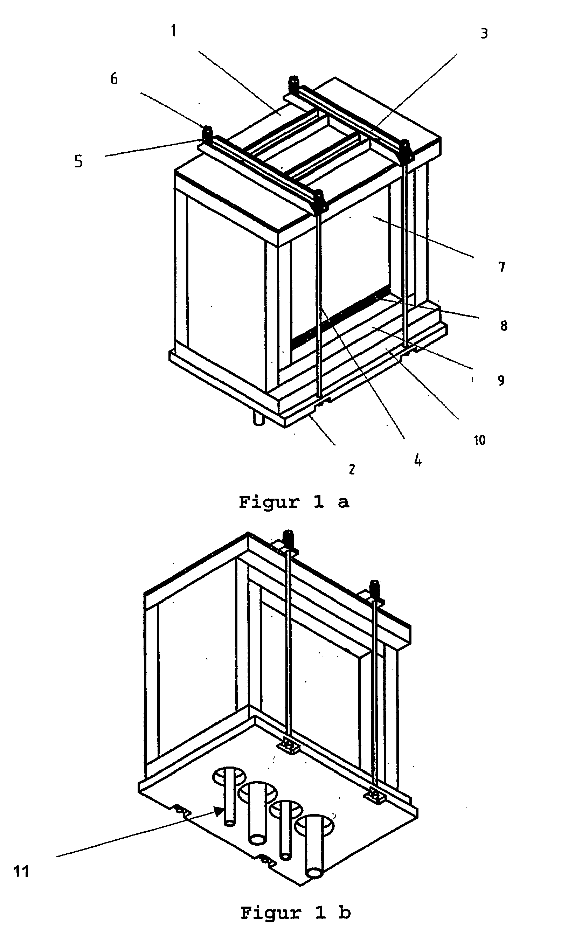

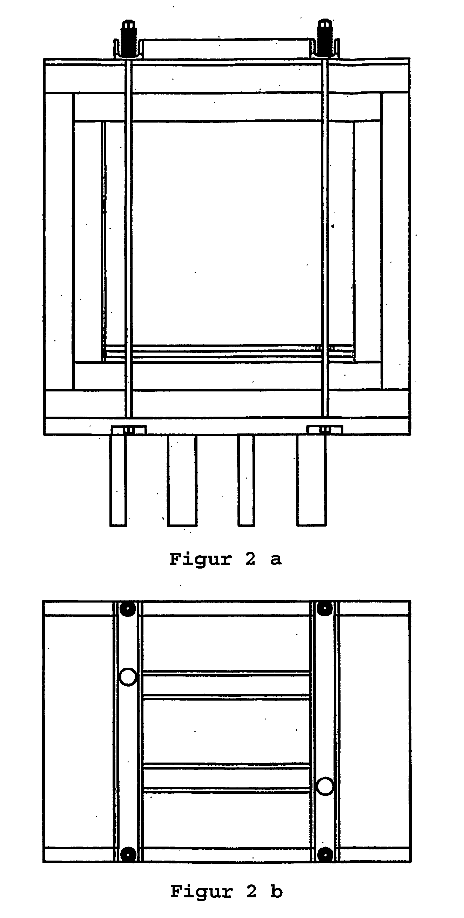

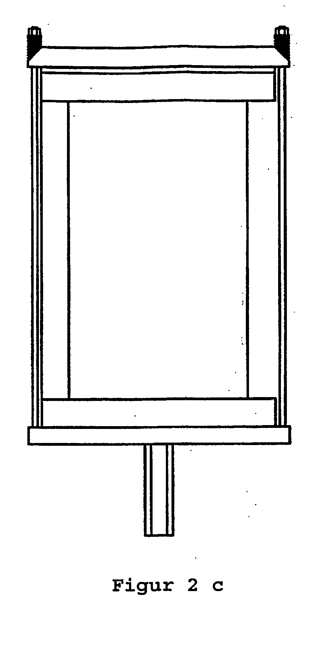

### Legende für die Figuren 1 und 2:

1. obere Spannplatte
2. untere Spannplatte
3. Spannrahmen
4. Zuganker
5. Ausdruckfeder
6. Sechskantmutter
7. Hochtemperatur-Brennstoffzellenstapel
8. Anschlussstück
9. erste Isolierschicht
10. zweite Isolierschicht
11. Betriebsmittelzu- bzw. -abführungen

Eine Ausführungsform der zur Durchführung des Verfahrens geeigneten Spannvorrichtung, wie den Figuren 1 und 2 dargestellt, weist eine 2-lagige Isolierung für die Aufnahme eines Hochtemperatur-Brennstoffzellenstapels auf. Das Isolationsmaterial hält regelmäßig eine Flächenbelastung von < 1 N/mm² ohne unzulässige Verformung aus. Die Geometrie der Isolation ist an den aufzunehmenden Hochtemperatur-Brennstoffzellenstapel angepasst.

An der Seite des Stapels, an der die Betriebsmittelzu- und/oder -abführungen 11 angeordnet sind, sind entsprechende Durchbrüche in der Isolation vorgesehen.
In dieser Ausführungsform sind an zwei gegenüberliegenden Seiten der Spannvorrichtung, vorteilhaft auf einer ersten Seite mit den Betriebsmittelzu- und -abführungen und der gegenüberliegenden, zweiten Seite, Spannplatten 1 und 2 angeordnet. Diese sollten vorteilhaft so groß wie die Isolation an diesen Seiten ausgeführt werden. Auf diesen Spannplatten ist jeweils ein Spannrahmen 3 mit Aufnahmen für Standardzuganker 4 angeordnet. Für eine gleichmäßige Druckbelastung sind wenigstens vier Standardzuganker 4 vorzusehen, die jeweils über Andruckfedern 5 und eine Sechskantmutter 6 eingestellt werden können.
In diesem Ausführungsbeispiel umfasst jeder Spannrahmen 3 Aufnahmen für vier Standardzuganker 4, wobei die Aufnahmen derart verteilt sind, dass sich je zwei an gegenüberliegenden Seiten der Spanplatte 1 bzw. 2 befinden. Der Spannrahmen 3 auf der ersten und der (gegenüberliegenden) zweiten Seite der Spannvorrichtung sind entsprechend spiegelsymmetrisch aufgebaut. Die Lage und die Anzahl der Zuganker 4 entspricht im wesentlichen denen der bislang eingesetzten hochwarmfesten speziellen Zuganker, davon abgesehen, dass erfindungsgemäß eine Isolation dazwischen vorgesehen ist. Durch gleichmäßiges Verspannen der Standardzuganker werden die gegenüberliegenden Spanplatten mitsamt der dazwischen liegenden Isolation 9 bzw. 10 auf den eingebauten Stapel 7, der gegebenenfalls auf einer Anschlussplatte 8 angeordnet ist, gedrückt und erzeugen so einen möglichst gleichmäßigen Anpressdruck auf den Stapel.

## Patentansprüche

1. Verfahren zur Herstellung eines Hochtemperatur-Brennstoffzellenstapels mit den Schritten:
- ein Hochtemperatur-Brennstoffzellenstapel wird durch Auflegen einer Last einem definierten Druck ausgesetzt,
- der Hochtemperatur-Brennstoffzellenstapel wird aufgeheizt, wobei Dichtungsmaterial aufgeschmolzen wird und zu einer Abdichtung der Einzelzellen führt,
- der Hochtemperatur-Brennstoffzellenstapel wird abgekühlt und mit einem ersten Mittel zum Verspannen verspannt,
- der so verspannte Hochtemperatur-Brennstoffzellenstapel wird mit einer Isolation umgeben,
- der Hochtemperatur-Brennstoffzellenstapel wird außerhalb der Isolation mit einem zweiten Mittel zum Verspannen verspannt.

2. Verfahren nach vorhergehendem Anspruch 1, bei dem der Brennstoffzellenstapel an sechs Seiten mit Isolation umgeben wird.

3. Verfahren nach einem der vorhergehenden Ansprüche 1 bis 2, bei dem der Brennstoffzellenstapel mit einer Isolation umgeben wird, die für einen Anpressdruck von weniger als 1 N/mm² ohne Anzeichen einer Vorformung geeignet ist.

4. Verfahren nach einem der vorhergehenden Ansprüche 1 bis 3, bei dem wenigstens zwei Zuganker als Mittel zum Verspannen eingesetzt werden.

5. Verfahren nach einem der vorhergehenden Ansprüche 1 bis 4, bei dem nach dem Verspannen mit den zweiten Mitteln zum Verspannen, die ersten Mittel zum Verspannen entfernt werden.

6. Verfahren nach einem der vorhergehenden Ansprüche 1 bis 5, bei dem als zweite Mittel zum Verspannen Komponenten eingesetzt werden, die für einen Einsatz bei maximal 150 °C ausgelegt sind.

7. Verfahren nach einem der vorhergehenden Ansprüche 1 bis 6, bei dem der mit den ersten Mitteln zum Verspannen verspannte Brennstoffzellenstapel vor dem Verspannen, mit den zweiten Mitteln zum Verspannen, an den Einsatzort des Hochtemperatur-Brenn-stoffzellenstapels verbracht wird

## Claims

1. Method for production of a high-temperature fuel cell stack, having the following steps:
- a high-temperature fuel cell stack is subjected to a defined pressure by application of a load,
- the high-temperature fuel cell stack is heated, with sealing material being melted and leading to sealing of the individual cells,
- the high-temperature fuel cell stack is cooled down and is braced by a first means for bracing,
- the high-temperature fuel cell stack which is being braced in this way is surrounded by insulation,
- the high-temperature fuel cell stack is braced by a second means for bracing, outside the insulation.

2. Method according to the preceding Claim 1, in which the fuel cell stack is surrounded with insulation on six sides.

3. Method according to one of the preceding Claims 1 or 2, in which the fuel cell stack is surrounded by insulation which is suitable for a contact pressure of less than 1 N/mm² without any indication of pre-forming.

4. Method according to one of the preceding Claims 1 to 3, in which at least two tie rods are used as means for bracing.

5. Method according to one of the preceding Claims 1 to 4, in which the first means for bracing are removed after bracing with the second means for bracing.

6. Method according to one of the preceding Claims 1 to 5, in which components which are designed for use at a maximum of 150°C are used as second means for bracing.

7. Method according to one of the preceding Claims 1 to 6, in which the fuel cell stack which has been braced by the first means for bracing is moved to the location where the high-temperature fuel cell stack will be used before being braced with the second means for bracing.

## Revendications

1. Procédé de réalisation d'un empilement de piles à combustible haute température, comportant les étapes suivantes :
- un empilement de piles à combustible haute température est exposé à une pression définie sous l'effet de l'application d'une charge,
- l'empilement de piles à combustible haute température est chauffé, un matériau d'étanchéité étant amené en fusion et induisant une étanchéité des piles individuelles,
- l'empilement de piles à combustible haute température est refroidi et est haubané par un premier moyen destiné à haubaner,
- l'empilement de piles à combustible haute température ainsi haubané est entouré par une isolation,
- l'empilement de piles à combustible haute température est haubané en dehors de l'isolation avec un deuxième moyen destiné à haubaner.

2. Procédé selon la revendication précédente 1, dans lequel l'empilement de piles à combustible haute température est entouré d'une isolation sur six côtés.

3. Procédé selon l'une quelconque des revendications précédentes 1 à 2, dans lequel l'empilement de piles à combustible haute température est entouré par une isolation, qui est apte à supporter une pression d'appui inférieure à 1 N/mm² sans subir de déformation.

4. Procédé selon l'une quelconque des revendications précédentes 1 à 3, dans lequel au moins deux tirants d'ancrage sont utilisés comme moyens destinés à haubaner.

5. Procédé selon l'une quelconque des revendications précédentes 1 à 4, dans lequel les premiers moyens destinés à haubaner sont retirés à la suite du haubanage avec les deuxièmes moyens destinés à haubaner.

6. Procédé selon l'une quelconque des revendications précédentes 1 à 5, dans lequel les composants utilisés pour former les deuxièmes moyens destinés à haubaner sont conçus pour être utilisés jusqu'à 150°C maximum.

7. Procédé selon l'une quelconque des revendications précédentes 1 à 6, dans lequel l'empilement de piles à combustible haute température haubané par les premiers moyens destinés à haubaner, est amené avec les deuxièmes moyens destinés à haubaner vers le lieu d'utilisation de l'empilement de piles à combustible haute température.
